# EUROPEAN PATENT SPECIFICATION

(11) **EP 2 604 119 B1**
(45) Date of publication and mention of the grant of the patent: **22.10.2014**
(21) Application number: 11425298.4
(22) Date of filing: 13.12.2011
(51) Int. Cl.: A21C 3/04

(54) **Sheeter machine and method of making an alimentary sheet dough**
Auswalzmaschine und Verfahren zur Herstellung von ausgewalztem Nahrungsmittelteig
Laminoir et procédé de fabrication d'une pâte alimentaire laminée

(43) Date of publication of application: 19.06.2013
(73) Proprietor: Chiaramello, Antonio, 12100 Cuneo (CN) (IT)
(72) Inventor: Chiaramello, Antonio, 12100 Cuneo (CN) (IT)
(74) Representative: Spina, Alessandro

(56) References cited:
- EP-A1- 0 438 923
- EP-A1- 0 442 695
- EP-A1- 0 545 725
- DE-A1- 1 632 344
- IT-A1- MI20 091 322
- US-A- 5 225 209
- US-B1- 6 322 345

## Description

The present invention relates to the field of processing alimentary doughs and in particular to a dough sheeter machine and a method of processing an alimentary dough to obtain a sheet dough.

There are known sheeter machines for alimentary doughs, such as for the preparation of fresh pasta and desserts, comprising a container capable of receiving an alimentary dough, downstream of which one or more pairs of counter-rotating rollers are arranged, through which the dough is subject to a "rolling" action, i.e. a progressive reduction in thickness, thus allowing to obtain a sheet having a predetermined thickness.

The transverse size of the nips defined between the counter-rotating rollers may be adjusted by increasing or decreasing the distance between their axes in order to obtain the desired thickness depending on the type of dough and sheet to be produced. For example, in the case of pasta, a thin sheet for "lasagne" or a thicker sheet for other types of pasta such as "tagliatelle" and "spaghetti".

Sheeter machines are also known in which the container is provided with rollers adapted to allow a progressive reduction in the thickness of a dough. In this way the dough is transformed into a sheet directly in the container and the sheet coming out therefrom is collected on a conveyor belt.

The European patent EP 1455583 describes, for example, a sheeter machine comprising a container suitable to receive an alimentary dough and provided with a pair of longitudinal guiding elements opposite to each other and adapted to allow the passage of the dough and its progressive reduction in thickness. The guiding elements each comprise a plurality of kneading rollers and other rollers that during operation are operated in opposite directions of rotation in order to convey the dough from the inlet to the outlet of the container.

Dough sheeters machines are also known comprising both a container suitable to carry out kneading of a dough, and more generally its transformation into a sheet, and one or more pairs of counter-rotating rollers arranged downstream of the container. In this case the counter-rotating rollers arranged downstream of the container do not roll the dough, which comes out of the container already in a sheet form, but carry out a compacting and refining action in which the molecules of the dough are oriented and stretched, thus making the finished sheet uniform and compact.

US 6322345 discloses a sheeter machine according to the preamble of claim 1 and a corresponding method of processing an alimentary dough to obtain a sheet dough.

During the transformation into a sheet, the dough is subjected to compression stresses and in particular to high shear stresses, as well as to friction heating due to its passage through the kneading rollers. It has been observed that due to these problems the final sheet dough loses the elasticity, the homogeneity and the color of the original dough, resulting in a degradation of its organoleptic properties. It is believed that the degradation of the dough quality occurs not only during the kneading step, but also during the subsequent steps of thickness reduction through the counter-rotating rollers arranged downstream of the container.

In fact, the amount of sheet dough coming out from the container and passing through the counter-rotating rollers arranged downstream thereof is not always constant. In particular, it has been noted that unpredictable increases in the amount of dough passing through the rollers result in its build-up upstream of the compacting nip defined between the counter-rotating rollers. This causes an increase in compressive stresses and particularly in shear stresses in the dough mass passing through the compacting nip and therefore, as in the kneading step, a loss of elasticity, homogeneity and color of the dough worsening its organoleptic properties.

There is therefore a need to provide sheeter machines suitable to further improve the characteristics of elasticity, homogeneity and, more generally, the organoleptic properties of an alimentary sheet dough, which is the main object of the present invention.

An idea of solution underlying the present invention is to adjust the rotation speed of the counter-rotating rollers arranged downstream of the container in order to prevent dough build-up whenever a larger amount of dough comes out from the container. In particular, the rotation speed of the counter-rotating rollers is temporarily increased so as to allow the eliminate amounts of dough in excess with respect to a nominal flow condition.

In order to allow to adjust the rotational speed of the counter-rotating rollers, the sheeter machine according to the invention comprises a control device arranged between the outlet opening of the container and the counter-rotating rollers proximate to the compacting nip defined between them and suitable to detect movements of the dough transverse to the compacting nip beyond a predefined threshold, thus generating an alarm signal. Such movements are in fact the direct consequence of the build-up of dough at the compacting nip. The rotational speed of the counter-rotating rollers is regulated by a control signal as a function of the alarm signal.

Thanks to these characteristics it is possible to maintain the flow of dough between the outlet opening of the container and the counter-rotating rollers in the ideal condition in which compressive stresses and in particular shear stresses are kept to a minimum compatibly with the sheeting process.

The control device is preferably of a contactless type, e.g. comprising optical sensors. This allows to detect movements of the dough transverse to the compacting nip in a simple and reliable manner, while minimizing the problems of fouling and/or blocking caused by portions and/or fragments that are detached from the dough mass passing through the counter-rotating rollers.

The use of a control device capable of minimizing the problems of dough build-up at the compacting nip may be advantageously combined with the use of a container equipped with a rotating-translating flat plates as described in Italian patent application ITM120091322, in the inventor's name. This structure in fact allows to make an alimentary sheet dough directly into the container through a continuous and progressive stretching action that resembles the manual movement for making a sheet dough, which minimizes compression stresses and in particular shear stresses on the molecules of the dough for the benefit of the organoleptic properties of the finished sheet dough. Therefore this is not a conventional sheeter machine, but rather a "compacting" machine capable of producing sheet doughs with superior organoleptic properties compared to those obtained with conventional sheeter machines.

The combination with the control device allows to prosecute sheeting of the dough while minimizing compression and shear stresses and thus to obtain sheet doughs that have substantially the same organoleptic properties of the dough introduced into the container despite the mechanical actions to which the dough is subject along the sheeting path. The sheet dough produced has substantially the same characteristics of elasticity, homogeneity and color of the original dough, thus being in ideal conditions not only for a direct use in the preparation of lasagne, spaghetti and the like, but also for further processing operations necessary to the preparation of stuffed pasta such as e.g. "ravioli", "tortelli" and "tortellini".

Further advantages and features of the sheeter machine and the sheeting method according to the present invention will be clear to those skilled in the art from the following detailed and non-limiting description of an embodiment thereof with reference to the attached drawings in which:
- Figure 1 is a cross-sectional view schematically showing a sheeter machine according to the present invention;
- Figure 2 shows a detail II of figure 1;
- Figure 3 shows a lateral view of the machine of figure 1; and
- Figures 4 and 5 are cross-sectional views similar to that of Figure 1, showing two operation steps of the sheeter machine according to the invention.

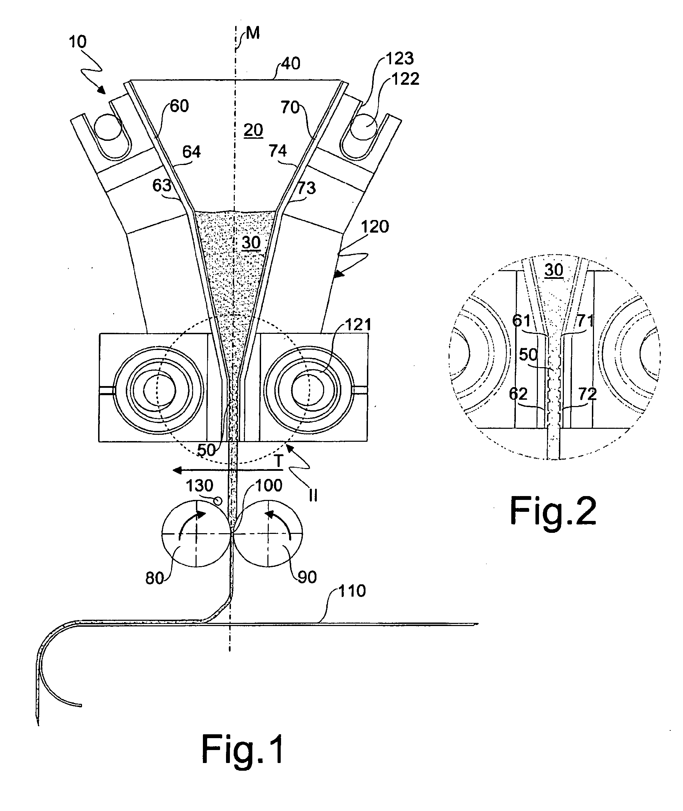

Referring to Figures 1 to 3, the sheeter machine 10 according to the present invention comprises a container 20 substantially funnel-shaped and suitable to receive an alimentary dough 30 through an inlet opening 40. The container 20 is also equipped with an outlet opening 50 suitable to allow passage of the dough 30 in order to form a sheet dough.

The outlet opening 50 is defined by the lower edges 61, 71 of a pair of walls 60, 70 of the container 20, that are in the form of flat plates opposite to each other and converging from the inlet opening 40.

Downstream of the container 20 there is at least one pair of motor driven rollers 80, 90 that extend in a longitudinal direction L of the sheeter machine 10 parallel to the outlet opening 50 and that are mutually spaced in a transverse direction T of the sheeter machine 10, perpendicular to the longitudinal direction L, so as to define between them a compacting nip 100 suitable to allow passage of the dough 30 coming out from the container 20.

The compacting nip 100 has a transverse size smaller than the transverse size of the outlet opening 50 of the container 20, adapted to reduce the thickness of the dough coming out therefrom. The transverse size of the compacting nip 100 may be adjusted depending on production requirements and on the type of dough processed by varying the distance between the axes of the counter-rotating rollers.

The rollers 80, 90 are connected to a gear motor (not shown) that allows their rotation in the opposite directions, thus dragging the dough 30 through the compacting nip 100. In other words, the rollers 80, 90 are counter-rotating rollers. In the figures, the direction of rotation of the counter-rotating rollers 80, 90 is shown by way of arrows.

Downstream of the counter-rotating rollers 80, 90 a conveyor belt 110 is arranged, which collects the sheet dough produced and conveys it to a packaging unit or to further processing units.

Preferably, at least one of the converging walls 60, 70 of the container 20 is movably restrained to a frame (not shown) of the sheeter machine 10 through a kinematic chain suitable to allow a rotation-translation movement of the converging wall, the movement being provided by a drive, typically an electric motor.

The rotational-translational movement of the at least one movable converging wall relative to the other one simultaneously results in a compression of the dough 30 and a movement thereof towards the outlet opening 50, whereby the dough 30 is subject to a progressive thickness reduction and comes from the container 20 in the form of a sheet.

Therefore, the processing of the dough 30 into a sheet dough is not exclusively performed by dragging by the counter-rotating rollers 80, 90, which generate high compression and shear stresses, but mainly occurs due to the rotational-translational movement of at least one of the converging walls 60, 70, i.e. by way of a compacting and progressively stretching movement. This configuration of the sheeter machine 10 deliberately resembles the manual movement of transformation of a dough into a sheet, which, as is known, allows to obtain a sheet dough having excellent organoleptic properties and high elasticity and compactness.

The rotational speed of the counter-rotating rollers 80, 90 is adjusted so as to obtain a tangential velocity of the dough 30 at the compacting nip 100 that is substantially equal to the speed it has when coming out from the container 20. This results in a substantially straight flow between the outlet opening 50 and the compacting nip 100, as shown in Figure 1.

In order to facilitate the processing of the dough 30 into a sheet dough, the converging walls 60, 70 of the container 20 have extensions 62, 72 substantially parallel to each other at their lower edges 61, 71.

Preferably, both converging walls 60, 70 are movably mounted on the frame of the sheeter machine 10, so that the compacting and dragging movement of the dough 30 is symmetrical.

In the illustrated embodiment each kinematic chain 120 comprises an eccentric roller 121 and a pin 122 slidably restrained to a guide 123, these being respectively connected to an outer surface 63, 73 of the converging walls 60, 70. In particular, each eccentric roller 121 is connected to the respective movable wall 60, 70 proximate to the outlet opening 50, while the respective pins 122 and guides 123 are connected to the walls 60, 70 proximate to the inlet opening 40 of the container 20.

Alternatively to the use of eccentric rollers, pins and guides the rotation-translation movement provided by the kinematic chain may be obtained by using cranks, cams and in many other equivalent ways well-known to those skilled in the art.

The kinematic chains associated with the converging walls 60, 70 of the container 20 may be advantageously synchronized with each other, so as to achieve a symmetrical compacting and dragging movement of the dough 30, as well as to balance the mechanical forces withstood by the frame of the sheeter machine 10.

In order to increase the grip on the dough 30 and therefore facilitate the dragging action inside the container 20, the inner surfaces 64, 74 of the converging walls 60, 70 are preferably rough or may be provided with a plurality of reliefs as, for example, textures, ridges and the like.

In order to keep the properties of the dough 30 introduced into the container 20 as constant as possible, the transverse size of the outlet opening 50 is preferably comprised between 5 and 6 mm.

According to the present invention, the sheeter machine 10 also comprises a control device arranged downstream of the outlet opening 50 proximate to the compacting nip 100 defined between the rollers 80, 90 and adapted to detect increases in the amount of dough 30 passing therebetween.

On equal rotation speed of the counter-rotating rollers 80, 90 increases in the amount of dough 30 coming out from the container 20 will cause a progressive build-up thereof at the compacting nip 100, thus interrupting its substantially straight flow. The alimentary dough 30 tends in particular to swell in the transverse direction T, thus losing the thickness acquired when coming out from the container 20. Consequently, the dough molecules passing through the compacting nip 100 are subjected to compression and shear stresses much higher than those of a normal operation condition, thus worsening the properties of the sheet dough produced, particularly in terms of elasticity, homogeneity and color.

The inventor has found that in order to minimize the build-up of dough at the compacting nip 100 it is necessary to increase the speed of rotation of the counter-rotating rollers 80, 90.

According to the invention, the rotation speed of the counter-rotating rollers 80, 90 is temporarily increased whenever the amount of dough built up at the compacting nip 100 exceeds a predefined movement threshold 140 in the transverse direction T.

The movement threshold 140 is of a linear type and comprises at least one straight line that extends in the longitudinal direction L of the sheeter machine 10 parallel to the compacting nip 100 is spaced away therefrom in the transverse direction T. In other words, the movement threshold 140 represents a maximum distance from the compacting nip 100 in the transverse direction T within which a movement of the flow of the dough 30 relative to a substantially straight flow direction between the outlet opening 50 and the compacting nip 100 can be tolerated.

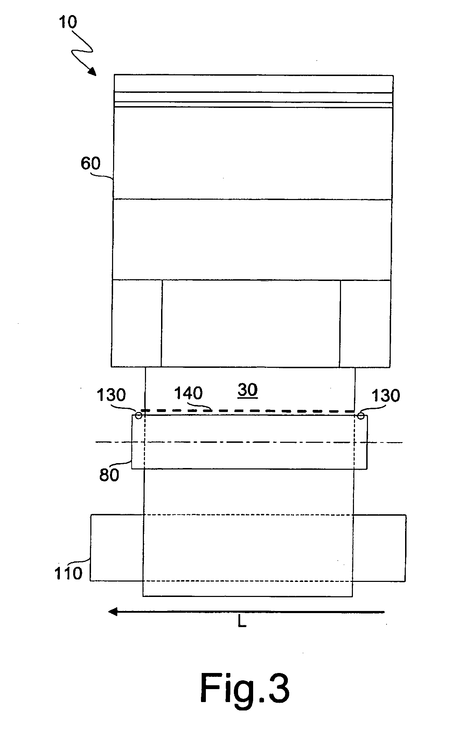

To this aim, with particular reference to Figure 3, the control device comprises a pair of passage detectors 130 restrained to the frame of the sheeter machine 10 and arranged at the ends of at least one of the counter-rotating rollers 80, 90, the roller 80 in the illustrated embodiment. The passage detectors 130 are aligned in the longitudinal direction L parallel to the compacting nip 100 and are spaced therefrom in the transverse direction T, thus defining the movement threshold 140.

The size of the movement threshold may vary depending on the type of dough to be processed and may e.g. be comprised between 8 and 15 mm.

The movement threshold may advantageously comprise a pair of lines parallel to the compacting nip 100 and arranged on opposite sides thereof in the transverse direction T. This configuration allows to increase the reliability of the control device and to detect not only swelling of the dough, which is substantially symmetrical relative to a median plane M of the sheeter machine 10 in the transverse direction T, but its deviations in the same transverse direction T in one or the opposite way with respect to the straight flow path, which lies on the median plane M.

For this purpose the control device may include two pairs of passage detectors 130 arranged on opposite sides of the compacting nip 100 in the transverse direction T.

According to an embodiment of the invention, the passage detectors 130 are of a contactless type and in particular optical sensors.

Among the optical sensors, those comprising optical fibers are preferred. These sensors in fact are extremely cheap and are not subj ect to oxidation problems. Optical fiber sensors are also compact, easy to install and insensitive to environmental factors such as, for example, humidity.

Alternatively, it is possible to use other types of optical sensors, such as, for example, infrared sensors.

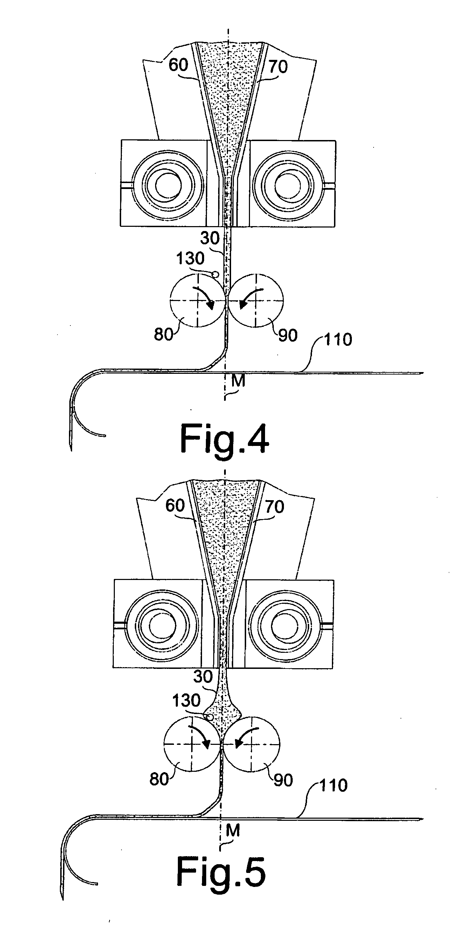

Referring to Figure 4, in a normal operating condition the flow of the dough 30 between the outlet opening 50 and the compacting nip 100 is substantially straight, whereby the dough 30 does not cross the movement threshold 140 defined by the passage detectors 130.

Referring to Figure 5, when an increase in the amount of dough coming out from the container 20 occurs, as explained above the dough 30 moves, typically swells, in the transverse direction T, thus crossing the movement threshold 140.

When using optical fiber sensors, the light beam emitted by the optical fibers is interrupted, thus causing the generation of an alarm signal on the basis of which the rotational speed of the counter-rotating rollers 80, 90 is increased. This has the effect of progressively restoring the linear flow condition of the mass of the dough 30 shown in Figure 4, i.e. of bringing the flow within the limit of movement from the compacting nip 100 defined by the movement threshold 140. In this condition, the rotational speed of the counter-rotating rollers 80, 90 is reduced to a nominal operation value, i.e. the value set under normal operating conditions of the sheeter machine 10.

The generation of the alarm signal and the control of the rotational speed of the counter-rotating rollers 80, 90 as a function of this signal may be advantageously automatically controlled by a control system (not shown) of the sheeter machine 10 by way of a suitable control program stored therein.

The embodiment of the invention herein described and illustrated is only an example susceptible of numerous variants. For example, it is possible to use passage detectors 130 of a contact type, e.g. comprising deformable members suitable to come into contact with the dough 30 when it swells or deviates from the straight flow path going beyond the movement threshold 140. The deformable members, e.g. in the form of rods, might be associated with micro switches activated upon their movement.

## Claims

1. A sheeter machine (10) for alimentary doughs, comprising a container (20) suitable to receive an alimentary dough (30) through an inlet opening (40) and provided with an outlet opening (50) for said dough (30), said sheeter machine (10) further comprising at least one pair of motor driven counter-rotating rollers (80, 90) arranged downstream of said outlet opening (50) and suitable to receive the dough (30) coming out from the container (20) in order to reduce its thickness through a compacting nip (100) defined between them in a transverse direction (T) of the sheeter machine (10), the sheeter machine (10) further comprising a control device arranged between the outlet opening (50) and said counter-rotating rollers (80, 90) proximate to said compacting nip (100) and adapted to detect increases in the amount of dough (30) passing therebetween, **characterized in that** said control device comprises at least one pair of passage detectors (130) arranged at the ends of at least one of the counter-rotating rollers (80, 90) in a longitudinal direction (L) of the sheeter machine (10), said passage detectors (130) being aligned in said longitudinal direction (L) parallel to the compacting nip (100) and being spaced therefrom in said transverse direction (T) thus defining a movement threshold (140).

2. A sheeter machine (10) according to claim 1, wherein said passage detectors (130) are of a contactless type.

3. A sheeter machine (10) according to claim 2, wherein said passage detectors (130) are optical sensors.

4. A sheeter machine (10) according to claim 3, wherein said optical sensors comprise optical fibers.

5. A sheeter machine (10) according to any one of claims 1 to 4, further comprising a control system capable of automatically controlling the rotational speed of the counter-rotating rollers (80, 90) as a function of an alarm signal generated by the passage detectors (130) of the control device.

6. A sheeter machine (10) according to any one of claims 1 to 5, wherein the outlet opening (50) is defined by lower edges (61, 71) of a pair of walls (60, 70) of the container (20) opposite to each other and converging from said inlet opening (40).

7. A sheeter machine (1) according to claim 6, wherein said converging walls (60, 70) are flat plates and wherein at least one of said flat plates is movably restrained to a frame of the sheeter machine (10) through a kinematic chain (120) suitable to provide it with a rotational-translational movement.

8. A method of processing an alimentary dough to obtain a sheet dough, wherein an alimentary dough (30) is inserted into a container (20) of a sheeter machine (10) and comes out therefrom through an outlet opening (50), said alimentary dough (30) being dragged by at least one pair of motor driven counter-rotating rollers (80, 90) through compacting nip (100) defined between them in a transverse direction (T), said method further comprising the steps of:
i. providing a control device between said outlet opening (50) and said counter-rotating rollers (80, 90), said control device comprising at least one pair of passage detectors (130) restrained to a frame of the sheeter machine (10) at the ends of at least one of the counter-rotating rollers (80, 90);
ii. arranging said passage detectors (130) in a longitudinal direction (L) parallel to the compacting nip (100) and spaced therefrom in said transverse direction (T) so as to defme a threshold (140) of movement of the alimentary dough (30) from the compacting nip (100) in said transverse direction (T);
iii. configuring the passage detectors (130) so as to generate an alarm signal when the alimentary dough (30) crosses the movement threshold (140);
iv. generating an alarm signal upon detection of a movement of the alimentary dough (30) beyond said movement threshold (140);
v. temporarily increasing the rotational speed of the counter-rotating rollers (80, 90) upon generation of said alarm signal; and
vi. reducing the rotational speed of the counter-rotating rollers (80, 90) to a nominal operating value when the alimentary dough (30) returns within the movement limit of movement from the compacting nip (100) defined by the movement threshold (140).

9. A sheet dough processing method according to claim 8, wherein said movement threshold (140) comprises at least one straight line that extends in the longitudinal direction (L) of the sheeter machine (10) parallel to the compacting nip (100), said line being spaced from the compacting nip (100) in the transverse direction (T).

10. A sheet dough processing method according to claim 8 or 9, wherein detection of a movement of the alimentary dough beyond the movement threshold (140) is an optical detection.

11. A sheet dough processing method according to any one of claims 8 to 11, wherein the alarm signal and the rotational speed of the counter-rotating rollers are controlled by a control system of the sheeter machine (10) by means of a control program stored therein.

## Patentansprüche

1. Eine Auswalzmaschine (10) für Nahrungsmittelteige, umfassend einen Behälter (20), der zur Aufnahme von Nahrungsmittelteig (30) durch eine Einlassöffnung (40) geeignet sowie mit einer Auslassöffnung (50) für den besagten Teig (30) versehen ist, wobei die besagte Auswalzmaschine (10) ferner wenigstens ein Paar von motorgetriebenen, gegenläufigen Walzen (80, 90) aufweist, welche stromabwärts der besagten Auslassöffnung (50) angeordnet sind und sich zur Aufnahme von aus dem Behälter (20) kommendem Teig (30) eignen, um dessen Dicke mittels des dazwischen in einer Querrichtung der Auswalzmaschine (10) definierten Kompaktierungs-Walzspaltes (100) zu reduzieren, wobei die Auswalzmaschine (10) ferner eine zwischen der Auslassöffnung (50) und den besagten, gegenläufigen Walzen (80, 90) in der Umgebung des besagten Kompaktierungs-Walzspalts (100) angeordnetes Steuereinrichtung umfasst, welche in der Lage ist, Anstiege in der dort hindurch fließenden Menge an Teig (30) zu erkennen, **dadurch gekennzeichnet, dass** die besagte Steuereinrichtung wenigstens ein Paar von Durchgangsdetektoren (130) aufweist, welche an den Enden wenigstens einer der gegenläufigen Walzen (80, 90) in Längsrichtung (L) der Auswalzmaschine (10) angeordnet sind, wobei die besagten Durchgangsdetektoren (130) in der besagten Längsrichtung (L) parallel zu dem Kompaktierungs-Walzspalt (100) ausgerichtet sind und davon in der besagten Querrichtung (T) beabstandet sind, um solchermaßen eine Bewegungsschwelle (140) zu definieren.

2. Eine Auswalzmaschine (10) nach Anspruch 1, wobei die besagten Durchgangsdetektoren (130) vom berührungslosen Typ sind.

3. Eine Auswalzmaschine (10) nach Anspruch 2, wobei die besagten Durchgangsdetektoren (130) optische Sensoren sind.

4. Eine Auswalzmaschine (10) nach Anspruch 3, wobei die besagten optischen Sensoren optische Fasern aufweisen.

5. Eine Auswalzmaschine (10) nach einem der Ansprüche 1 bis 5, ferner umfassend ein Steuersystem, welches zur automatischen Regelung der Drehgeschwindigkeit der gegenläufigen Walzen (80, 90) als Funktion eines von den Durchgangsdetektoren (130) der Steuereinrichtung erzeugten Alarmsignals geeignet ist.

6. Eine Auswalzmaschine (10) nach einem der Ansprüche 1 bis 5, wobei die Auslassöffnung (50) durch die unteren Kanten (61, 71) eines Paars von Wänden (60, 70) des Behälters (20) begrenzt ist, die einander gegenüber liegen und von der besagten Einlassöffnung (40) aus zueinander konvergieren.

7. Eine Auswalzmaschine (10) nach Anspruch 6, wobei die besagten konvergierenden Wände (60, 70) flache Platten sind, und wobei wenigstens eine der besagten flachen Platten an einem Rahmen der Auswalzmaschine (10) beweglich zurückgehalten ist mittels einer kinematischen Kette (120), die in der Lage ist, jener eine rotatorischtranslatorische Bewegung zu erteilen.

8. Ein Verfahren zur Verarbeitung von Nahrungsmittelteig, um ausgewalzten Teig zu erhalten, wobei ein Lebensmittelteig (30) in einen Behälter (20) einer Auswalzmaschine (10) hineingegeben wird und von dort durch eine Auslassöffnung (50) herauskommt, wobei der besagte Lebensmittelteig (30) von wenigstens einem Paar von motorgetriebenen, gegenläufigen Walzen (80, 90) durch einen Kompaktierungs-Walzspalt (100) gezogen wird, der von jenen in einer Querrichtung (T) begrenzt wird, wobei das Verfahren ferner die folgenden Schritte aufweist:
i. Vorsehen einer Steuereinrichtung zwischen der besagten Auslassöffnung (50) und den besagten gegenläufigen Walzen (80, 90), wobei die besagte Steuereinrichtung wenigstens ein Paar von Durchgangsdetektoren (130) umfasst, die an dem Rahmen der Auswalzmaschine (10) an den Enden wenigstens einer der gegenläufigen Walzen (80, 90) zurückgehalten sind;
ii. Anordnen der besagten Durchgangsdetektoren (130) in Längsrichtung (L) parallel zu dem Kompaktierungs-Walzspalt (100) und davon in der besagten Querrichtung (T) beabstandet, um eine Schwelle (140) für die Bewegung des Lebensmittelteigs (30) von dem Kompaktierungs-Walzspalt (100) in der besagten Querrichtung (T) zu definieren;
iii. Konfigurieren der Durchgangsdetektoren (130) derart, dass sie ein Alarmsignal abgeben, wenn der Lebensmittelteig (30) die Bewegungsschwelle (140) durchquert;
iv. Erzeugen eines Alarmsignals bei Erkennung einer Bewegung des Lebensmittelteigs (30) jenseits der Bewegungsschwelle (140);
v. zeitweises Erhöhen der Drehgeschwindigkeit der gegenläufigen Walzen (80, 90) bei Erzeugung des besagten Alarmsignals; und
vi. Reduzieren der Drehgeschwindigkeit der gegenläufigen Walzen (80, 90) auf einen Nennbetriebswert, wenn der Lebensmittelteig (30) in die Bewegungsgrenzen der Bewegung des von der Bewegungsschwelle (140) definierten Kompaktierungs-Walzspalts (100) zurückkehrt.

9. Ein Verfahren zur Verarbeitung von ausgewalztem Teig nach Anspruch 8, wobei die besagte Bewegungsschwelle (140) wenigstens eine gerade Linie umfasst, welche sich in Längsrichtung (L) der Auswalzmaschine (10) parallel zu dem Kompaktierungs-Walzspalt (100) erstreckt, wobei die besagte Linie von dem Kompaktierungs-Walzspalt (100) in der Querrichtung (T) beabstandet ist.

10. Ein Verfahren zur Verarbeitung von ausgewalztem Teig nach Anspruch 8 oder 9, wobei die Erkennung einer Bewegung des Lebensmittelteigs jenseits der Bewegungsschwelle (140) eine optische Erkennung ist.

11. Ein Verfahren zur Verarbeitung von ausgewalztem Teig nach einem der Ansprüche 8 bis 11, wobei das Alarmsignal und die Drehgeschwindigkeit der gegenläufigen Walzen durch ein Steuersystem der Auswalzmaschine (10) mittels eines darin gespeicherten Steuerprogramms gesteuert werden.

## Revendications

1. Laminoir (10) pour pâtes alimentaires, comprenant un conteneur (20) approprié pour recevoir une pâte alimentaire (30) par une ouverture d'entrée (40) et doté d'une ouverture de sortie (50) pour ladite pâte (30), ledit laminoir (10) comprenant en outre au moins une paire de rouleaux tournant dans le sens inverse (80, 90) entraînés par moteur, agencés en aval de ladite ouverture de sortie (50) et appropriés pour recevoir la pâte (30) sortant du conteneur (20) afin de réduire son épaisseur par un espacement de compactage (100) défini entre eux dans une direction transversale (T) du laminoir (10), le laminoir (10) comprenant en outre un dispositif de commande agencé entre l'ouverture de sortie (50) et lesdits rouleaux tournant dans le sens inverse (80, 90) à proximité dudit espacement de compactage (100) et adapté pour détecter des augmentations de quantité de pâte (30) passant entre ces derniers, **caractérisé en ce que** ledit dispositif de commande comprend au moins une paire de détecteurs de passage (130) agencés au niveau des extrémités d'au moins l'un des rouleaux tournant dans le sens inverse (80, 90) dans une direction longitudinale (L) du laminoir (10), lesdits détecteurs de passage (130) étant alignés dans ladite direction longitudinale (L) parallèle à l'espacement de compactage (100) et étant espacés de ce dernier dans ladite direction transversale (T) définissant ainsi un seuil de déplacement (140).

2. Laminoir (10) selon la revendication 1, dans lequel lesdits détecteurs de passage (130) sont d'un type sans contact.

3. Laminoir (10) selon la revendication 2, dans lequel lesdits détecteurs de passage (130) sont des capteurs optiques.

4. Laminoir (10) selon la revendication 3, dans lequel lesdits capteurs optiques comprennent des fibres optiques.

5. Laminoir (10) selon l'une quelconque des revendications 1 à 4, comprenant en outre un système de commande pouvant commander automatiquement la vitesse de rotation des rouleaux tournant dans le sens inverse (80, 90) en fonction d'un signal d'alarme généré par les détecteurs de passage (130) du dispositif de commande.

6. Laminoir (10) selon l'une quelconque des revendications 1 à 5, dans lequel l'ouverture de sortie (50) est définie par des bords inférieurs (61, 71) d'une paire de parois (60, 70) du conteneur (20) opposées entre elles et convergeant à partir de ladite ouverture d'entrée (40).

7. Laminoir (1) selon la revendication 6, dans lequel lesdites parois convergentes (60, 70) sont des plaques plates et dans lequel au moins l'une desdites plaques plates est retenue de manière mobile sur un châssis du laminoir (10) par le biais d'une chaine cinématique (120) appropriée pour la doter d'un mouvement de rotation et de translation.

8. Procédé pour traiter une pâte alimentaire afin d'obtenir une pâte laminée, dans lequel une pâte alimentaire (30) est insérée dans un conteneur (20) d'un laminoir (10) et sort de ce dernier par une ouverture de sortie (50), ladite pâte alimentaire (30) étant traînée par au moins une paire de rouleaux tournant dans le sens inverse (80, 90) entraînés par moteur dans un espacement de compactage (100) défini entre eux dans une direction transversale (T), ledit procédé comprenant en outre les étapes consistant à :
i. prévoir un dispositif de commande entre ladite ouverture de sortie (50) et lesdits rouleaux tournant dans le sens inverse (80, 90), ledit dispositif de commande comprenant au moins une paire de détecteurs de passage (130) retenus sur un châssis du laminoir (10) au niveau des extrémités d'au moins l'un des rouleaux tournant dans le sens inverse (80, 90) ;
ii. agencer lesdits détecteurs de passage (130) dans une direction longitudinale (L) parallèle à l'espacement de compactage (100) et espacés de ce dernier dans ladite direction transversale (T) afin de définir un seuil (140) de déplacement de la pâte alimentaire (30) à partir de l'espacement de compactage (100) dans ladite direction transversale (T) ;
iii. configurer les détecteurs de passage (130) afin de générer un signal d'alarme lorsque la pâte alimentaire (30) franchit le seuil de déplacement (140) ;
iv. générer un signal d'alarme suite à la détection d'un déplacement de la pâte alimentaire (30) au-delà dudit seuil de déplacement (140) ;
v. augmenter temporairement la vitesse de rotation des rouleaux tournant dans le sens inverse (80, 90) suite à la génération dudit signal d'alarme ; et
vi. réduire la vitesse de rotation des rouleaux tournant dans le sens inverse (80, 90) à une valeur nominale opérationnelle lorsque la pâte alimentaire (30) revient dans la limite de déplacement du déplacement à partir de l'espacement de compactage (100) définie par le seuil de déplacement (140).

9. Procédé de traitement de pâte laminée selon la revendication 8, dans lequel ledit seuil de déplacement (140) comprend au moins une ligne droite qui s'étend dans la direction longitudinale (L) du laminoir (10) parallèle à l'espacement de compactage (100), ladite ligne étant espacée de l'espacement de compactage (100) dans la direction transversale (T).

10. Procédé de traitement de pâte laminée selon la revendication 8 ou 9, dans lequel la détection d'un déplacement de la pâte alimentaire au-delà du seuil de déplacement (140) est une détection optique.

11. Procédé de traitement de pâte laminée selon l'une quelconque des revendications 8 à 11, dans lequel le signal d'alarme et la vitesse de rotation des rouleaux tournant dans le sens inverse sont commandés par un système de commande du laminoir (10) au moyen d'un programme de commande mémorisé dans ce dernier.
